**Europäisches Patentamt**

**European Patent Office**

**Office européen des brevets**

(11) Numéro de publication : **0 031 781**
**B1**

(12) **FASCICULE DE BREVET EUROPÉEN**

(45) Date de publication du fascicule du brevet :
29.02.84

(51) Int. Cl.³ : **F 41 G 3/22, G 02 B 23/16**

(21) Numéro de dépôt : **80401869.5**

(22) Date de dépôt : **24.12.80**

(54) Perfectionnements aux dispositifs de visée stabilisée pour véhicules.

(30) Priorité : **26.12.79 FR 7931721**

(43) Date de publication de la demande :
**08.07.81 Bulletin 81/27**

(45) Mention de la délivrance du brevet :
**29.02.84 Bulletin 84/09**

(84) Etats contractants désignés :
**DE GB IT SE**

(56) Documents cités :
**FR-A- 921 181**
**FR-A- 1 549 505**
**FR-A- 2 330 063**
**US-A- 2 966 063**
**US-A- 3 035 477**
**US-A- 3 188 870**
**US-A- 3 383 926**
**US-A- 3 471 931**

(73) Titulaire : **SOCIETE D'APPLICATIONS GENERALES D'ELECTRICITE ET DE MECANIQUE S A G E M**
**6, Avenue d'Iéna**
**F-75783 Paris Cedex 16 (FR)**

(72) Inventeur : **Picard, Jean-François**
**6bis, rue de la Ceinture**
**F-78000 Versailles (FR)**
Inventeur : **Jacquard, Paul**
**8, Avenue du Maréchal de Lattre de Tassigny**
**F-78230 Le Pecq (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Perfectionnements aux dispositifs de visée stabilisée pour véhicules

L'invention concerne un dispositif de visée stabilisée destiné à être monté sur véhicule, comportant un cœur muni d'un gyroscope et porté par un ensemble comprenant un premier équipage orientable autour d'un axe extérieur par un moteur d'orientation et un second équipage monté sur le premier de façon à pouvoir être orienté autour d'un axe intermédiaire, orthogonal à l'axe extérieur, par un moteur d'orientation commandé par une boucle d'asservissement. Elle trouve une application particulièrement importante, bien que non exclusive, constituée par les dispositifs qui doivent travailler dans une plage importante d'orientation autour de l'axe intermédiaire. On peut notamment citer, à titre d'exemple, les viseurs pour tir anti-aérien destinés aux véhicules terrestres, les viseurs de nez ou de toit pour hélicoptères et les viseurs pour les navires susceptibles de prendre des mouvements d'amplitude importante, dans lesquels il n'est généralement pas nécessaire de réaliser une stabilisation autour de la ligne de visée.

On connaît des dispositifs du genre ci-dessus défini dans lesquels le moteur d'orientation du premier équipage est commandé par une boucle d'asservissement. Dans ces dispositifs, un couple d'inertie parasite C apparaît au niveau de l'axe extérieur, qui constitue généralement l'axe de gisement, tandis que l'axe intermédiaire constitue alors l'axe de site. Ce couple C est de la forme :

$$C = (I_g + I_v)\, \dot{\omega}\, tg\, s \qquad (1)$$

où

$I_g$ est le moment d'inertie du premier équipage (cardan de gisement en général) et de lui seul, autour de l'axe extérieur (axe de gisement) ;

$I_v$ est le moment d'inertie du cœur autour de la ligne de visée ;

$\dot{\omega}$ est l'accélération en rotation autour de l'axe perpendiculaire aux deux autres (axes de site et de gisement), c'est-à-dire autour de l'axe de roulis à gisement nul ;

s est l'angle de site.

Le couple C devient important dès que tg s devient notable, c'est-à-dire dès que le système s'écarte de la position canonique, pour laquelle la ligne de visée est orthogonale aux axes de pointage (axes de gisement et de site).

Etant donné l'importance prise par le couple C aux angles de site élevés, l'étude du système et la détermination de la résiduelle de stabilisation ne peuvent être faites que si les sollicitations auxquelles sera soumis le dispositif (notamment accélérations angulaires et fréquences d'excitation) sont parfaitement connues, ce qui est loin d'être toujours le cas.

Ce problème n'est pas résolu dans le dispositif de visée stabilisée à périscope décrit dans le brevet US-A-3 035 477. Ce dispositif comporte un gyroscope à deux degré de liberté qui commande, par l'intermédiaire d'un système de synchronisation, l'orientation d'anneaux de roulis et de tangage, qui portent des anneaux croisés d'assiette permettant de compenser les effets des erreurs de positionnement. Ce montage n'empêche nullement le système de s'écarter de la position canonique.

Par ailleurs, ce problème est très différent de ceux qui se posent dans la réalisation de plates-formes stabilisées suivant trois axes et comportant des cardans montés autour d'axes de tangage, de roulis et d'azimut, et qui comportent notamment le basculement suffisamment rapide du cardan de roulis lors de tangages excédant 90°. On a dans ce cas prévu l'utilisation de deux cardans de roulis en cascade, à savoir un cardan intérieur ayant une plage de liberté faible et un cardan extérieur muni d'un moteur commandé par un synchro-transmetteur porté par le cardan interne (brevet US 3 188 870) : mais cette disposition n'a pour but que de faciliter le basculement. La demanderesse a pour la première fois posé un problème qui n'a rien à voir avec le précédent, réduire l'incidence des caractéristiques du porteur sur celles du dispositif en minimisant le facteur de multiplication du terme $\dot{\omega}$ dans l'expression du couple parasite prépondérant.

Et, pour cela, l'invention vise tout d'abord à fournir un dispositif de visée dans lequel le terme tangente est rendu faible en maintenant le système de stabilisation dans une position proche de la position canonique, quelle que soit l'orientation de la ligne de visée.

Dans ce but, l'invention propose notamment un dispositif dans lequel le cœur est monté sur le second équipage par un mécanisme muni d'un moteur d'orientation autour d'un axe intérieur situé dans un plan orthogonal à l'axe intermédiaire, moteur commandé à partir des signaux fournis par le gyroscope par une boucle d'asservissement et le moteur d'orientation autour de l'axe extérieur est muni d'un système de recopie commandé par un détecteur des écarts angulaires de l'axe intérieur par rapport à la position canonique.

Dans un tel dispositif, la stabilisation est obtenue en commandant les moteurs des boucles d'orientation autour des axes intermédiaire et inférieur (moteurs de site et de latéral dans le cas le plus fréquent) uniquement à partir des signaux fournis par le gyroscope, dont l'axe de spin est orienté suivant la ligne de visée, par l'intermédiaire des boucles d'asservissement. Un réseau correcteur sera prévu dans chaque boucle pour assurer la stabilité de l'asservissement.

Au contraire, le moteur d'orientation du premier équipage est commandé par une simple chaîne de recopie. celle-ci doit répondre à une seule condition importante : dans toutes les conditions de fonctionnement, elle doit avoir une constante de temps suffisamment faible pour que le débattement angulaire que prend le cœur

autour de l'axe intérieur soit faible, typiquement un à quelques degrés. Ainsi, les axes sensibles du gyroscope et les axes de rotation commandés par les moteurs d'asservissement restent toujours pratiquement co-linéaires et aucun réseau de compensation des variations du gain mécanique en fonction de l'élongation angulaire autour de l'axe intermédiaire (angle de site) n'est nécessaire.

La boucle de recopie devra évidemment comporter un réseau de compensation des variations du gain mécanique en fonction de l'élongation angulaire autour de l'axe intermédiaire. Mais l'adjonction d'un tel réseau de compensation pose, dans ce cas, beaucoup moins de problèmes que lorsqu'on veut l'insérer dans une boucle de stabilisation.

En effet, une boucle de stabilisation doit être prévue pour obtenir une raideur maximum et une bande passante maximum, ce qui exige des gains élevés et des réseaux d'avance de phase. Au contraire, le gain de la chaîne de recopie peut être relativement faible.

Dans le dispositif suivant l'invention, le couple parasite critique devient le couple $C_s$ autour de l'axe du second équipage (axe de site en général). Il est donné par la formule :

$$C_s = (I_v + I_s) \, \dot{\omega} \, tg \, I \qquad (2)$$

où

$I_s$ est le moment d'inertie du second équipage (cardan de site en général) autour de l'axe intermédiaire, et de ce second équipage seul, à l'exclusion du cœur ;

$\dot{\omega}$ est l'accélération autour de l'axe perpendiculaire aux axes de site et de latéral ;

$I$ est l'angle de latéral (angle entre la ligne de visée et l'axe perpendiculaire aux axes de site et de latéral).

La disposition qui vient d'être décrite permet de réduire très sensiblement l'effet des couples parasites qui apparaissent autour de l'axe intermédiaire. Pour améliorer encore les résultats obtenus, il convient de réduire l'amplitude du couple. De façon à diminuer $I_s$, on donnera avantageusement une structure inversée à l'ensemble cœur-second équipage. Au lieu de constituer ce dernier par une fourche et de placer le cœur entre les branches de la fourche, on incorporera les parties volumineuses du cœur dans des épanouissements placés de part et d'autre du second équipage, qui pourra ainsi avoir une inertie faible. Cette diminution de $I_s$ pourra s'accompagner d'une augmentation de $I_v$, mais cette dernière sera en général faible et l'effet total sera bénéfique.

On voit que l'effet favorable de cette seconde mesure ne peut exister que grâce à la mise en œuvre de la première, qui fait intervenir $I_s$ dans l'expression du couple parasite à prendre en considération.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels :

la figure 1 est un schéma de principe montrant les composants d'un dispositif de pointage stabilisé suivant l'invention,

la figure 2 est une vue fantôme en perspective montrant une répartition possible des composants d'un dispositif de pointage suivant l'invention, destiné à être utilisé en viseur de toit sur l'hélicoptère,

la figure 3 montre un montage possible du dispositif de la figure 2 sur un hélicoptère.

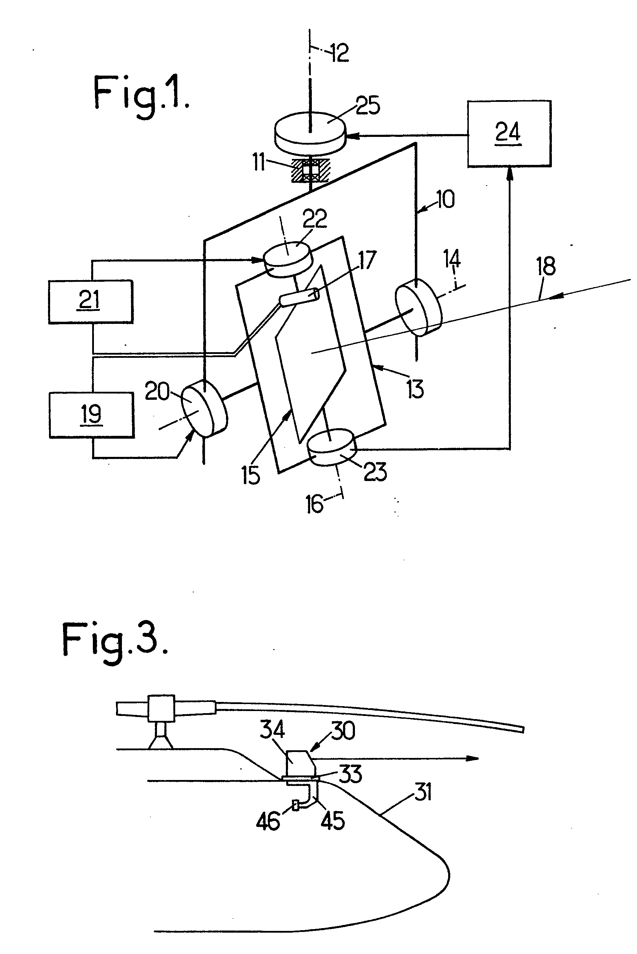

Le dispositif de pointage montré en figure 1 comporte un premier équipage 10, constitué par un cardan monté sur un boîtier 11 fixe de façon à pouvoir tourner autour d'un axe 12, qu'on supposera par la suite être l'axe de gisement. Le premier équipage 10, constituant cardan de gisement, porte un second équipage 13 par l'intermédiaire de roulements disposés de façon que le second équipage puisse tourner autour d'un axe intermédiaire 14 perpendiculaire au premier et constituant axe de site. Le second équipage 13 porte le cœur 15 du dispositif de visée. Mais le cœur 15 n'est pas fixé sur le second équipage 13, mais il est porté par des paliers de façon à pouvoir tourner autour d'un axe interne 16, qu'on appellera axe de latéral, situé dans un plan perpendiculaire à l'axe de site 14, comme l'axe de gisement 12.

Le gyroscope de stabilisation 17 est monté directement sur le cœur 15. L'axe de spin du gyroscope est orienté suivant la direction 18 de la visée. L'un des axes d'entrée du gyroscope est orienté suivant l'axe de latéral 16 et l'autre axe d'entrée fait donc, avec l'axe de site 14, un angle égal à celui dont a tourné le cœur, autour de l'axe de latéral, par rapport à la position canonique.

Le cœur 15 et le second équipage 13, constitué par un cardan de site, sont munis chacun d'une boucle de stabilisation, constituée par un circuit d'asservissement dont le détecteur est constitué par le gyroscope 17. La boucle de stabilisation en site comprend une électronique 19 de commande d'un moteur d'orientation en site 20. De façon similaire, la boucle d'asservissement en latéral comprend un circuit 21 qui reçoit des signaux d'entrée du gyroscope 17 et qui commande un moteur 22 d'orientation du cœur autour de l'axe de latéral.

Comme on l'a déjà indiqué plus haut, le dispositif doit être conçu de façon que le gyroscope 17 s'écarte peu de la position canonique, c'est-à-dire que les axes sensibles du gyroscope 17 restent toujours pratiquement parallèles aux axes d'action des moteurs de stabilisation 20 et 22.

Pour atteindre ce résultat, il faut faire tourner le premier équipage, c'est-à-dire le cardan de gisement 10, de façon que l'angle de rotation du cœur autour de l'axe de latéral 16 reste toujours très faible. Ce résultat est atteint en munissant le premier équipage 10 d'une chaîne de recopie comportant un détecteur 23 des rotations du cœur 15 autour de l'axe de latéral, une électronique 24 et un moteur 25 d'orientation de l'équipage 10.

Dans ces conditions, les déplacements angulaires du cœur 15 autour de l'axe de latéral 16 auront toujours une amplitude faible, typiquement limitée à quelques degrés. Dans la pratique, l'amplitude sera fréquemment inférieure au degré puisqu'elle correspond uniquement aux erreurs de recopie. La chaîne de recopie doit évidemment comporter un réseau de compensation des variations du gain mécanique de la cinématique en fonction de l'angle de site. Mais cette adjonction est facile à réaliser étant donné que le gain de la chaîne est relativement non critique, ce qui ne serait pas le cas d'une boucle de stabilisation. La constitution de la chaîne pourra être classique. Elle comportera généralement un senseur potentiométrique ou inductif 23, une chaîne de recopie à faible gain et à réseau de compensation et un moteur d'entraînement. L'ensemble de la chaîne peut être analogique et commander le moteur 25 par modulation de la largeur de créneaux de courant continu en fonction de l'angle mesuré. Le réseau de compensation peut être un amplificateur dont le gain est modifié pas à pas en réponse à la valeur de l'angle de site pour approcher de la loi de compensation théorique.

La boucle de stabilisation en site comportera une électronique fournissant un gain plus élevé, mais elle n'aura pas à comporter de réseau de compensation des variations du gain mécanique, étant donné les faibles rotations du cœur autour de l'axe de latéral 16.

Enfin, la boucle de stabilisation autour de l'axe de latéral pourra être de constitution simple, étant donné la faible amplitude des déplacements angulaires du cœur 15. En particulier, le moteur d'entraînement pourra être d'un type ayant un débattement angulaire très faible (moteur sans collecteur par exemple).

On voit que le dispositif suivant l'invention fait disparaître les limitations apportées dans la stabilisation par le domaine angulaire en site. Ce domaine angulaire ne sera plus limité que par des problèmes d'optique ou de mécanique. Il écarte la nécessité d'une pleine connaissance des contraintes auxquelles sera soumis le dispositif en fonctionnement, et notamment les fréquences et accélérations d'excitation du support.

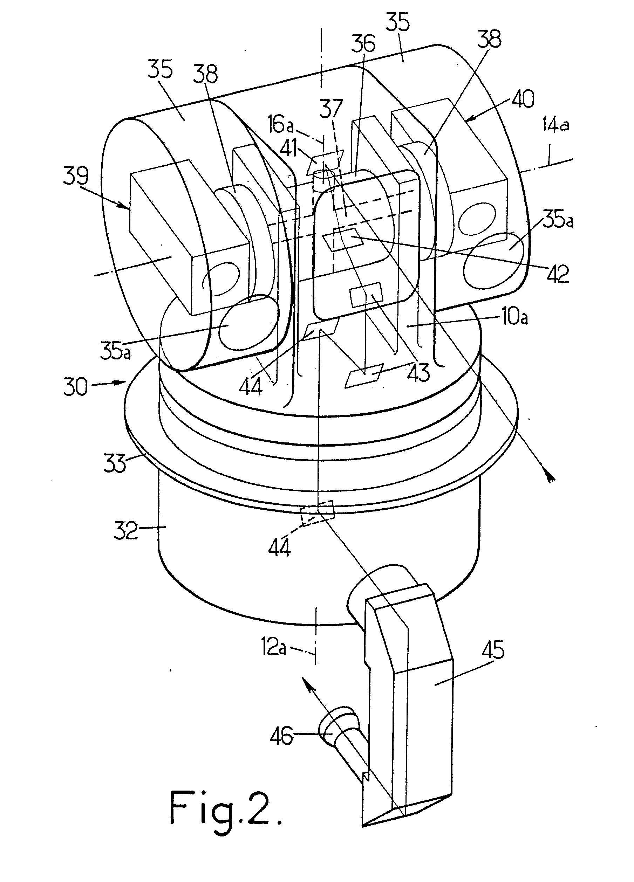

Le dispositif 30 montré schématiquement en figures 2 et 3 est destiné à être monté sur un hélicoptère, schématisé en 31. Il comprend un boîtier externe 32 muni d'une bride 33 de fixation sur le toit de l'hélicoptère. Sur la figure 3, ce boîtier est représenté muni d'une cloche 34 de protection de l'ensemble des parties. Sur la figure 2, cette cloche est remplacée par des renflements cylindriques 35 munis de fenêtres 35a.

La géométrie du dispositif montré en figure 2 est inversée par rapport à celle montrée en figure 1. D'une part, le premier équipage 10a est constitué par un cardan qui fait saillie vers le haut à partir de son axe support, au lieu d'être suspendu comme dans le cas de la figure 1 ; d'autre part, les parties les plus encombrantes du cœur sont placées de part et d'autre du premier équipage (au lieu d'être placées entre les branches du cardan qui le constitue), ce qui permet de diminuer sensiblement le moment d'inertie de ce premier équipage 10a autour de l'axe de gisement 12 et celui de l'équipage 13a autour de l'axe de site 14a.

Dans le dispositif montré en figure 2, où les organes correspondant à ceux de la figure 1 sont désignés par le même numéro de référence affecté de l'indice a, le second équipage comprend un manchon tubulaire 36 solidarisé de plateaux latéraux 38 par un axe 37 placé suivant l'axe de site 14a. Ces plateaux portent les divers senseurs nécessaires : par exemple, l'un des plateaux pourra porter l'ensemble 39 d'un télémètre laser et d'une caméra de télévision ; l'autre plateau pourra alors porter une caméra thermique 40. Les arbres 37 peuvent appartenir à un croisillon dont les autres branches sont orientées suivant l'axe de latéral 16a et portent le cœur. Pour plus de clarté, la figure 2 montre uniquement, parmi les composants du cœur, le miroir de latéral 41 d'un système de visée optique à partir de la cabine de l'hélicoptère. Ce système optique comprend successivement, sur le trajet de la lumière incidence à partir de l'axe de visée 18a, le miroir de latéral 41, le miroir de site 42 porté par le second équipage, deux miroirs de renvoi 43, les miroirs de gisement 44 et une lunette 45 munie d'un oculaire 46.

Un dispositif du genre illustré en figure 2 permet, pour des accélérations angulaires atteignant 6 r/s$^2$ et des fréquences s'étendant au-delà de 70 Hz, d'obtenir une résiduelle de stabilisation ne dépassant pas 30 microradians.

Par ailleurs, on voit que la disposition montrée en figure 2 permet d'accéder aisément aux différents senseurs pour les réparer ou les remplacer.

L'invention ne se limite évidemment pas aux modes particuliers de réalisation représentés et décrits à titre d'exemples et il doit être entendu que la portée du présent brevet s'étend à toute variante restant dans le cadre des équivalences.

**Revendications**

1. Dispositif de visée stabilisée destiné à être monté sur véhicule, comportant un cœur muni d'un gyroscope (17) et porté par un ensemble comprenant un premier équipage (10) orientable autour d'un axe extérieur (12) par un moteur d'orientation (25) et un second équipage (13) monté sur le premier (10) de façon à pouvoir être orienté autour d'un axe intermédiaire (14), orthogonal à l'axe extérieur (12), par un moteur d'orientation (20) commandé par une boucle d'asservissement (19), caractérisé en ce que le cœur est monté sur le second équipage par un mécanisme muni d'un moteur (22) d'orientation autour d'un axe intérieur (16) situé dans un plan orthogonal à l'axe intermédiaire (14), moteur commandé, à partir des signaux fournis par le gyroscope (17), par une boucle d'asservissement (21) et en ce que le moteur (25) d'orientation autour de l'axe extérieur (12) est muni d'un système de recopie commandé par un détecteur (23) des écarts angulaires de l'axe intérieur (16) par rapport à la position canonique.

2. Dispositif suivant la revendication 1, caractérisé en ce que les moteurs (20, 22) des boucles d'orientation autour des axes intermédiaire (14) et intérieur (16) sont commandés uniquement à partir des signaux fournis par le gyroscope (17), dont l'axe de spin est orienté suivant la ligne de visée (18) par l'intermédiaire des boucles d'asservissement (19 et 21).

3. Dispositif suivant la revendication 2, caractérisé en ce que chaque boucle (19, 20) comporte un réseau correcteur de stabilisation de l'asservissement.

4. Dispositif suivant la revendication 1, 2 ou 3, caractérisé en ce que la chaîne de recopie est prévue pour maintenir le débattement angulaire du cœur autour de l'axe intérieur (16) dans un domaine de quelques degrés.

5. Dispositif suivant l'une quelconque des revendications précédentes, caractérisé en ce que la chaîne de recopie comporte un réseau de compensation des variations du gain mécanique en fonction de l'élongation angulaire du second équipage autour de l'axe intermédiaire.

6. Dispositif suivant l'une quelconque des revendications précédentes, caractérisé en ce que les éléments volumineux du cœur sont placés le long de l'axe intermédiaire (14a) de part et d'autre du premier équipage (10a).

7. Application du dispositif de visée suivant l'une quelconque des revendications précédentes à des véhicules, caractérisée en ce que l'axe extérieur constitue axe de pointage en gisement et l'axe intermédiaire constitue axe de pointage en site.

## Claims

1. Stabilized sighting device for use on a vehicle, comprising a core provided with a gyroscope (17) and carried by an assembly comprising a first unit (10) mounted for rotation about an external axis (12) by an orientation axis (25) and a second unit (12) carried on the first (10) for angular movement about an intermediate axis (14), which is orthogonal to the external axis, by an orientation motor (20) controlled by a servoloop (19), characterized in that the core is connected to the second unit by a mechanism provided with a motor (22) for angular movement about an internal axis (16) located in a plane which is perpendicular to the intermediate axis (14) said motor being controlled responsive to the signals delivered by the gyroscope (17) by a servoloop (21) and in that the motor (25) for angular movement about the external axis (12) is provided with a position copying system controlled by a detector (23) responsive to the angular deviations of the internal axis (16) with respect to the canonical position.

2. Device according to claim 1, characterized in that the loops for angular movement about the intermediate and internal axes are exclusively controlled from the signals delivered by the gyroscope (17) whose spin axis is directed along the line of sight (18), by the servoloops (19 and 21).

3. Device according to claim 2, characterized in that each servoloop includes a correction network for stabilizing the servo action.

4. Device according to claim 1, 2 or 3, characterized in that the position copying loop is arranged to maintain the angular deviation of the core about the inner axis within a range of some degrees.

5. Device according to anyone of the preceding claims, characterized in that the position copying loop has a compensation network for compensating the variations of the mechanical amplification gain responsive to the extent of angular movement of the second unit about the intermediate axis.

6. Device according to any one of the preceding claims, characterized in that the bulky components of the core are located along the intermediate axis on both sides of the first unit.

7. Application of the sighting device according to any one of the preceding claims to vehicles, characterized in that the external axis constitues a bearing axis and the intermediate axis constitutes an elevation axis.

## Ansprüche

1. Vorrichtung mit stabilisierter Visierlinie für Fahrzeuge, die ein Herz aufweist, das mit einem Gyroskop (17) versehen ist und von einer Vorrichtung getragen wird, die ein erstes Bauteil (10) aufweist, das von einem Stellmotor (25) um eine äußere Achse (12) drehbar ist, und ein zweites Bauteil (13) , das auf dem ersten Bauteil (10) so angebracht ist, daß es von einem Stellmotor (20), der über einen Steuerkreis (19) gesteuert wird, um eine dazwischenliegende mittlere Achse (14) gedreht werden kann, die senkrecht zur äußeren Achse (12) steht, dadurch gekennzeichnet, daß das Herz auf dem zweiten Bauteil mittels einer Vorrichtung angebracht ist, die mit einem Stellmotor (22) versehen ist, der die Drehung um eine innere Achse (16) bewirkt, die in einer Ebene senkrecht zur mittleren Achse (14) liegt, wobei der Motor mittels der von dem Gyroskop (17) abgegebenen Signale über einen Steuerkreis (21) gesteuert wird, und daß der Stellmotor (25), der die Drehung um die äußere Achse (12) bewirkt, mit einer Reproduktionseinrichtung versehen ist, die von einem Detektor (23) zur Feststellung der Winkelabweichungen von der inneren Achse (16) in Bezug auf die Position des Geschützes gesteuert wird.

2. Vorrichtung nach Anspruch 1, dadurch gekennzeichnet, daß die Stellmotoren (20, 22) der Stromkreise zur Drehung um die mittlere (14) und innere (16) Achse ausschließlich über Signale gesteuert werden, die von dem Gyroskop (17) abgegeben werden, dessen Drehachse mit Hilfe der Steuerkreise (19, 21) nach der Visierlinie (18) ausgerichtet ist.

3. Vorrichtung nach Anspruch 2, dadurch gekennzeichnet, daß jeder Steuerkreis (19, 21) einen Korrektor zur Stabilisierung der Steuerung aufweist.

4. Vorrichtung nach einem der Ansprüche 1, 2 oder 3, dadurch gekennzeichnet, daß der Zweig der Reproduktionseinrichtung vorgesehen ist, um die Winkelabweichung von dem Herz um die innere Achse (16) im Bereich von einigen Grad zu halten.

5. Vorrichtung nach einem der vorhergehenden Ansprüche, dadurch gekennzeichnet, daß der Zweig der Reproduktionseinrichtung ein Kompensationsglied aufweist, um die Schwankungen in dem mechanischen Stellfaktor in Abhängigkeit von der Winkelabweichung des zweiten Bauteils um die mittlere Achse zu kompensieren.

6. Vorrichtung nach einem der vorhergehenden Ansprüche, dadurch gekennzeichnet, daß die körperlichen Elemente von dem Herz beidseitig von der mittleren Achse (14a) des Bauteils (10a) angeordnet sind.

7. Verwendung der Visiervorrichtung nach einem der vorhergehenden Ansprüche auf Fahrzeugen, dadurch gekennzeichnet, daß die äußere Achse die Richtachse für die seitliche Verschwenkung bildet, und daß die mittlere Achse die Richtachse für die Höhenverschwenkung bildet.

# Fig.1.

# Fig.3.

Fig.2.